# EUROPEAN PATENT SPECIFICATION

(11) **EP 1 116 374 B1**
(45) Date of publication and mention of the grant of the patent: **26.03.2003**
(21) Application number: 99944207.2
(22) Date of filing: 24.09.1999
(51) Int. Cl.: H04M 3/50, H04M 3/56, G06F 17/60

(54) **SYSTEM AND METHOD FOR CONDUCTING AN AUCTION OVER A COMMUNICATIONS NETWORK**
SYSTEM UND VERFAHREN ZUR DURCHFÜHRUNG EINER AUKTION ÜBER EIN KOMMUNIKATIONSNETZWERK
SYSTEME ET PROCEDE POUR EFFECTUER UNE VENTE AUX ENCHERES SUR UN RESEAU DE COMMUNICATION

(30) Priority: 25.09.1998 US 101857 P; 04.03.1999 CA 2264407
(43) Date of publication of application: 18.07.2001
(73) Proprietor: Soma Networks, Inc., Toronto, Ontario M5V 1V3 (CA)
(72) Inventor: Snelgrove, William Martin, Toronto, Ontario M5A 2R1 (CA); Stumm, Michael, Toronto, Ontario M8X 2A6 (CA); De Simone, Mauricio, Toronto, Ontario M5J 2R9 (CA)
(74) Representative: Strachan, Victoria Jane
(86) International application number: CA9900871
(87) International publication number: WO00019691

(56) References cited:
- EP-A- 0 620 669
- EP-A- 0 716 386
- FR-A- 2 658 635
- US-A- 4 939 773

## Description

### FIELD OF INVENTION

The present invention relates generally to communication networks and more particularly to a system for conducting an auction over a communications network.

### BACKGROUND

Traditional auctions take the form of a physical gathering of bidders at an auction place. A major limitation associated with physical auctions is that bidders are forced either to travel or to appoint a representative for the auction.

Advance bidding may be done by mail or by facsimile so that bidders do not have to be physically present at the auction. However, advance bidding suffers a significant disadvantage as compared to real-time bidding since it lacks immediacy and the bidders have no opportunity to increase a bid in quick response to competitive bids.

Several methods of conducting auctions over the Internet in real-time fashion are known. This requires, however, that all participants in the auction use an Internet-connected computer. Furthermore, auctioneers may find that it is more difficult to obtain a good price with an auction conducted over the Internet because it lacks the excitement that can be conveyed by voice.

Telephone conference systems are used today to share, in real-time, voice messages among persons in various locations. It is difficult, however, to hold an auction using a traditional telephone conferencing system, at least for the following reasons: the auctioneer may have difficulty identifying bidders by their voices; telephone conferences are very noisy when they have a large number of participants; there is no method of ejecting a bidder who chooses to interfere with the auction by making noise or pretending to be the auctioneer; and it is difficult to enforce payment because it is difficult to verify the identity and creditworthiness of bidders. One known system for conducting an auction over a communication network is taught in *Interactive call-handling,* European Patent Application 620669A1 to Katz ("Katz"). Katz teaches a system having a plurality of telephone terminals within a telephone communication network that are connected to a receiving station by a plurality of processing systems. The system can be used to conduct auctions, whereby a plurality of bidders each use one of the telephone terminals to submit their bids by pushing buttons on their key-pads which generate DTMF tones that are sent to the processing systems. The bids are sorted and organized by the processing systems and presented on a computer monitor to the auctioneer. Conversely, the auctioneer's messages to the bidders are presented either though a television link that runs concurrently to the system taught in Katz, or the auctioneer's messages are played on the earpiece of the bidder's telephone terminal. One drawback to Katz is that bidders do not submit their bids orally, and instead rely on DTMF tones to signal their intentions, which thus reduces the overall excitement and energy that can exist in traditional auctions. Concurrently, the bidders in Katz cannot 'hear' the bids being submitted by other bidders, which also reduces the applicability of Katz in substantially reproducing traditional auctions. Overall, it can be seen that Katz does not reproduce certain aspects of traditional auctions that may be desirable.

### SUMMARY OF INVENTION

It is therefore an object of this invention to provide an improved auction system that overcomes totally or in part the limitations of the above-mentioned auction systems.

One aspect of the invention is defined as a bidder message processor comprising processing means for processing a bidder message entered through a bidder voice terminal into a bidder data signal, wherein said bidder data signal includes a bidder identifier, and output means for outputting the bidder data signals at an auctioneer terminal.

Another aspect of the invention is defined as a bidder message processor system comprising a bidder message processor and connecting means. The bidder message processor comprises processing means for processing a bidder message entered through a bidder voice terminal into a bidder data signal, wherein said bidder data signal includes a bidder identifier, and output means for outputting the bidder data signals at an auctioneer terminal. The connecting means connect the bidder message processor to the bidder voice terminal over a communications network.

Another aspect of the invention is defined as an auctioneer message processor system comprising an auctioneer voice transmitter for broadcasting auctioneer voice messages from an auctioneer terminal simultaneously to a plurality of bidder voice terminals, and connecting means for connecting said bidder voice terminals to said auctioneer voice transmitter over a communications network.

A further aspect of the invention is defined as an auction system for use in an auction conducted over a communications network, the auction system comprising a bidder message processor, an auctioneer voice transmitter and connecting means. The bidder message processor comprises means for processing a bidder message entered through any one of a plurality of bidder voice terminals into a bidder data signals, wherein said bidder data signal comprises a bidder identifier, and means for outputting the bidder data signals at an auctioneer terminal. The auctioneer voice transmitter broadcasts auctioneer voice messages from the auctioneer terminal simultaneously to selected bidder voice terminals. The connecting means connect said bidder voice terminals to the bidder message processor and to the auctioneer voice transmitter over the communications network.

A further aspect of the invention is defined as an auction system comprising auctioneer output means, a plurality of bid interpreters which in operation are connected to a plurality of corresponding bidders voice terminals, an auctioneer voice manager coupled to the bid interpreters, for receiving voice messages from an auctioneer voice transmitter over the communications network and for broadcasting the auctioneer voice messages simultaneously to all bidder voice terminals connected to the bidder interpreters. Each bid interpreter includes means for decoding bidder messages, means for attaching corresponding bidder identifiers to each decoded bidder message and forming data signals and means for transmitting the data signals to the auctioneer output means, over a communications network.

A further aspect of the invention is defined as a method of processing bidder messages for use in an auction conducted over a communications network, the method comprising the steps of processing a bidder messages received entered through a voice terminal into a data (digital) signals, the processing step comprising attaching a bidder identifier to said data signal, and outputting said data signal at an auctioneer terminal;

A further aspect of the invention is defined as a method of conducting an auction over a communications network, the method comprising the steps of transmitting bidders messages over the communications network and transmitting auctioneer messages over the communications network. The step of transmitting bidders messages comprises receiving the bidder messages from a plurality of bidder voice terminals, processing bidders messages into data signals, forming output signals by attaching bidder identifiers to selected data signals, and sending and outputting the output signals at an auctioneer terminal. The step of transmitting auctioneer messages comprises receiving the auctioneer messages from the auctioneer terminal and broadcasting the auctioneer messages to selected bidder voice terminals.

### BRIEF DESCRIPTION OF DRAWINGS

The present invention will be further understood from the following detailed description, with reference to the drawings in which:
**Figure 1** presents a block diagram of an auction system in accordance with an embodiment of the invention;
**Figure 2** presents a block diagram of a bidder message processor system in accordance with the embodiment in **Figure 1;** and
**Figure 3** presents a block diagram of an auction system in accordance with a preferred embodiment of the invention.

### DETAILED DESCRIPTION OF PREFERRED EMBODIMENT

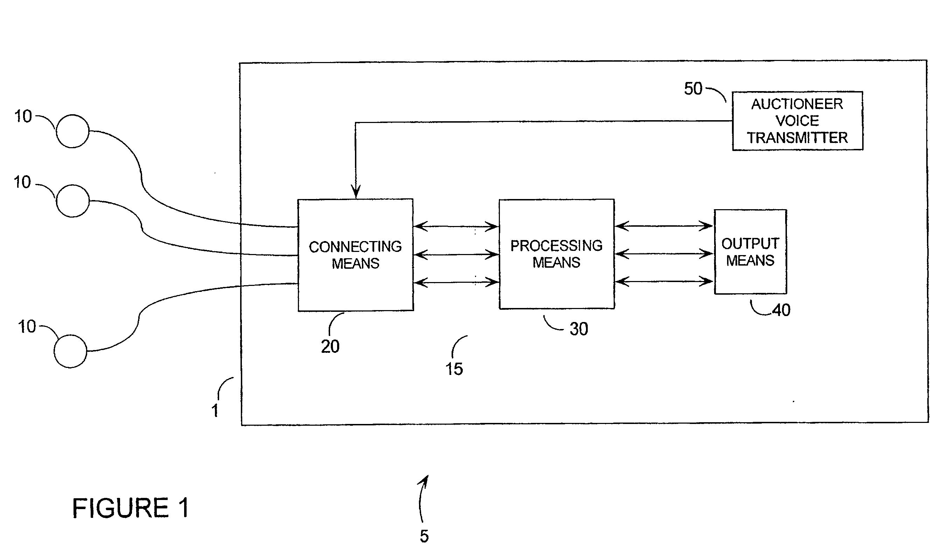

**Figure 1** presents a block diagram of an auction system **1** in accordance with an embodiment of the invention. Auction system **1** is used to facilitate the participation, in real-time, of persons located at various physical locations in an auction, by means of voice terminals **10.** The communication takes place over a communications network **5,** comprising the bidder voice terminals **10** and the auction system **1**.

The auction system **1** comprises an auctioneer voice transmitter **50,** a bidder messages processor **15** and connecting means **20** connecting the bidder voice terminals **10** to the auctioneer voice transmitter **50** and to the bidder messages processor **15.** The bidder messages processor **15** comprises processing means **30** and output means **40.**

The bidder voice terminals **10** may be any one of cordline, cordless, wireless telephone sets or the like. Other voice terminals may also be used, as they emerge.

The connections between various components of the auction system **1,** as well as between the bidder voice terminals **10** and the auction system, can be physical connections, wireless connections or a combination of both. Likewise, it will be appreciated by a person skilled in the art the elements of the auction system **1,** such as the connecting means **20** and the processing means **30,** can each comprise subelements distributed at various physical locations. Furthermore, they may be mainly software structures attached to existing hardware platforms available in existing communications networks, specially designed hardware platforms, or a combination of both, such as interface access cards. Moreover, the auctioneer's tasks may be performed by a person or by a data processor that may act on location or remotely, in analyzing the information on the output means **40** and commanding the auctioneer voice transmitter **50** to send voice messages to bidder terminals **10.** Therefore, the communication links and the blocks shown in the block diagram of **Figure 1** should not be considered restrictive in a physical sense.

In operation, a bidder participating in an auction conducted using the auction system **1** of **Figure 1,** enters bidder messages through a bidder voice terminal **10.** The bidder messages are transmitted to the processing means **30** through connecting means **20.** The bidder messages are processed into bidder data signals to be outputted at the output means **40** in order of arrival. The processed bidder data signals comprise information on the bidder message content as well as a bidder identifier. Therefore, through the output means **40,** the auctioneer acknowledges the content of bidder messages and the identity of bidders that originate the messages, in an orderly fashion. This allows the auctioneer to identify the bidders, reducing ambiguity when more bids are received within a small time interval from various locations.

In order to communicate with the bidders, the auctioneer generates voice messages through the auctioneer voice transmitter **50.** From the auctioneer voice transmitter **50,** the auctioneer voice messages are broadcasted simultaneously to the bidder voice terminals **10** through the connecting means **20.**

The connecting means **20** comprises input/output (I/O) ports which allow messages from the bidder voice terminals **10** to pass through to the rest of the auction system **1** and allow messages from the auction system **1** to be transmitted to the bidder voice terminals **10.** The connecting means can be any combination of hardware and software connecting means available in existing communication networks, such as wire circuits, fiber optics circuits, wireless circuits, virtual connections, with or without associated controls, such as manually operated switchboards or other interfaces, or through embedded logical systems, comprising multiplexers, flip-flops, latches and the like. Since the connecting means **20** regulates the flow of messages from and to the bidder voice terminals **10**, the connecting means **20** maintains a record of bidders participating in the auction, through the auction system **1.** The record of participating bidders can be maintained in a list set-up for this purpose, or by simply maintaining the communication channels with participating bidders open, and ensuring that communication channels with non-participating bidders are blocked. Preferably, the record of bidders participating to the auction is updated based on access conditions. Such an embodiment will be described in more detail hereinafter.

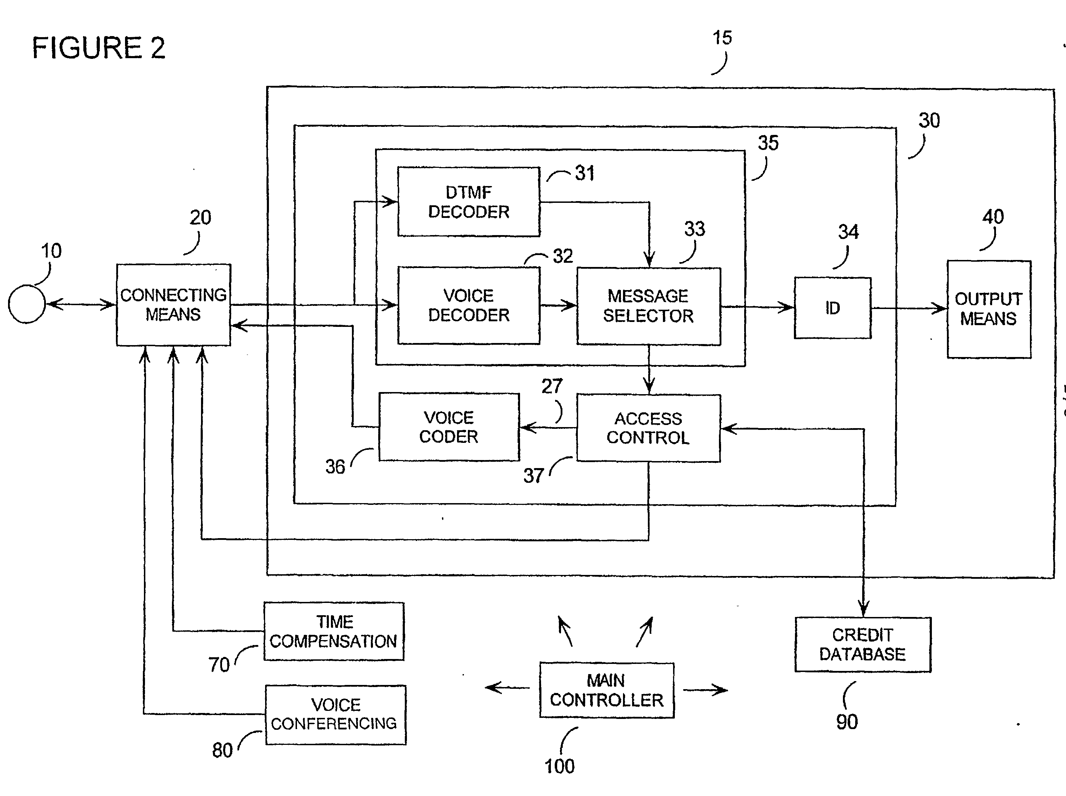

**Figure 2** presents a detailed view of the bidder message processor **15** and the connecting means **20,** according to an embodiment of the invention.

The bidder message processor **15** comprises processing means **30** and output means **40.**

In the embodiment in **Figure 2,** the processing means **30** comprises recognizing means **35,** a bidder identifier appending block **34,** an access control block **37** and a voice coder **36.**

A bidder message entering the processing means **30** is routed to the recognizing means **35,** where its content is recognized. The recognizing means **35** selects the auction relevant messages from other bidder messages that a bidder may input through a bidder voice terminal **10.** The auction relevant messages can be, for example, bids or access messages.

The valid bids can be numerical voice messages such as "One hundred and fifty (150)", or " Two thousand(2000)". For simplicity, it is assumed that the price and the bids are represented by numerical values. However, it will be understood that an auction may be conducted by coding the implied trading means otherwise than in a numerical fashion, for example by a color code.

The access messages generally contain information which bidders are required to provide in order to participate in various stages of the auction. The access messages may be passwords, credit information, confirmations of compliance with terms and conditions of the auction, and the like.

Through the bidder voice terminals **10,** bidder messages can be entered in various ways. The bidder messages may be voice messages or digital signals. For example, if a bidder voice terminal **10** is a telephone set having the touch-tone™ option, bidder messages can be entered as Dual-Tone-Multi-Frequency (DTMF) signals.

The embodiment depicted in **Figure 2** comprises a DTMF decoder **31** and a voice decoder **32,** for decoding the bidder messages into data signals that are further filtered by a message selector **33.** The DTMF decoder **31** and the voice decoder **32,** may be any such decoders known in the art. Based on the decoded bidder messages coming from the DTMF decoder **31** or from the voice decoder **32,** the message selector **33** selects the auction relevant bidder messages. The message selector **33** may comprise, for example, a database comprising codes representing either auction relevant messages or parts of auction messages, such that bidder messages can be selected as being relevant to the auction being conducted or as being unintelligible with respect to the auction conducted. However, any other means known in the art for identifying a given signal as matching one of a plurality of predetermined codes, can be employed for the implementation of the message selector **33.** Voice recognition algorithms common in the art often comprise voice decoding means and selection means such as blocks **32** and **33** in **Figure 2.**

Message selector **33** may perform one of several tasks. Some of the auction relevant messages, such as bids, are sent to the bidder identifier appending block **34** which appends a bidder identifier, and sends the message, in this new form, to the output means **40.** Other auction relevant messages, such as access messages, may be analyzed within an access control block **37.** Bidder messages selected as being unintelligible with respect to the conducted auction may be discarded or may be sent to the access control block **37,** as well.

The access control block **37** may perform one or more of several functions. The access control block **37** may verify an access message such as a password or a credit card number, for example by accessing special databases such as a credit database **90.** Also, in order to determine the access rights of a bidder to the auction, the access control block **37** may generate access information requests as data signals **22** that are coded into voice messages by a voice coder block **36** and sent, through the connecting means **20,** to targeted bidder voice terminal **10.** Furthermore, upon determining whether a certain bidder may or may not participate in the auction, the access control block **37** may send control signals **24** to the connecting means **20,** instructing the connecting means **20** to allow or to restrict the communication of said bidder with the auction system **1.** In this way, the access control block **37** updates the record of bidders participating in the auction, which is maintained by the connecting means **20** as previously described.

Whenever the message selector **33** detects a bidder message that is not relevant to the auction, which may be just noise or a comment not pertaining to the auction, the message selector can either discard such a message or it can allow the auction system **1** to respond to such a message, by sending an indicative signal to the access control block **37.** Upon reception of such a signal, indicating the reception of a bidder message that is not relevant to the auction, the access control block **37** may generate an alert signal. Alert signals may be further processed in various ways. They may be stored within a memory component of the access control block **37** for further use. Also, an alert signal may be sent through the voice coder block **36** and through the connecting means **2**0, to the bidder voice terminal **10** at which said message selected as being not relevant to the auction originated. Such an alert signal may, for example, inform the bidder that the message was not understood and it must be re-entered, or, that the bidder voice terminal **10** has to be disconnected from the auction system **1,** because of the unacceptable transmission of repeated unintelligible messages.

The output means **40** are preferably, but not restricted to, visual display means such as a monitor screen, that permit an auctioneer to acknowledge the bidder messages and the identity of the bidders originating them.

A time compensation block **70** allows the auction system **1** to estimate propagation delays of signals in traveling within the communications network **5.** The estimates may be used to compensate for the bias in favor of physically closer bidders, for whom the bidding signals have to travel a smaller distance. In deciding which bid was placed first in real-time, to compensate for these delays, the computer may subtract the round trip delay through network **5** from the time at which the bid was received at the output means. The estimates may also be used to alert the auctioneer that a bidder had entered a bid before being able to hear the closing gavel, and that his bid should therefore be allowed.

The time compensation block **70** can obtain the propagation delay estimates by any suitable technique known in the art. For example, they can be obtained from the controlling software of the network **5.** Alternatively, round-trip estimates may be obtained by estimating the delay before receiving an echo from the bidder voice terminal **10** using a system identification algorithm based on the echo cancellation technique known in the art. Another option is to attach a time stamp to every message originated within the auction system **1** or at a bidder voice terminal **10.**

In the embodiment in **Figure 2,** a voice conferencing block **80** is used to enable a voice conferencing system among the auctioneer and the participating bidders. The voice conferencing block **80** may use any of the common voice-conferencing techniques known in the art, preferably combined with techniques used to reduce the effect of combining background noise from many sources, such as the companding or squelch techniques.

In the embodiment depicted in **Figure 2,** the time compensation block **70** and the voice conferencing block **80** are shown as being connected to the connecting means **20,** since preferably, either one of the routines achieved by these blocks involves only bidders participating in the auction. As previously described, a record of such bidders is maintained through the connecting means **20**.

A controller **100** controls the overall operation of the components of the auction system **1.** For example, the controller **100** determines the output format on the output means **40** as well as various access control routines within the access control block **37.** Preferably, the auctioneer may access the auction system **1** and determine the operation of its components through an auctioneer interface (not shown), linked to the controller **100.**

The embodiment of the invention presented in **Figures 1** and **2** addresses the problems noted in the Background section, as follows. The auction system in **Figures 1** and **2** allows real-time communication among bidders and auctioneer, without requiring bidders to be physically present at an auction place, or to appoint a representative at an auction place. Through this system, bidders may communicate bidirectionally with the auctioneer by means of voice terminals. By allowing the auction to be conveyed by voice at least on the bidders side, the system described above is closer to recreating the atmosphere of physical auctions and thus can be found more entertaining or easier to use by potential bidders, leading to a potentially more competitive bidding process. Furthermore, voice terminals can be incorporated within personal computers or they can_function as independent pieces of equipment. In the latter case, they can be more accessible in terms of cost of use. Furthermore, current voice terminals are usually wider spread and better connected to existing communication networks, than Internet connected computers used in prior-art systems. Even further, wireless voice terminals are smaller and lighter, thus easier to carry than personal computers.

In addition, the auction system **1** presented in **Figures 1** and **2** overcomes the problems that would be encountered in conducting an auction using a traditional telephone conference system, mentioned in the background. Incoming messages from bidders are processed in a form that allows the auctioneer to identify corresponding bidders, through the output means **40.** Messages from bidders are outputted in order of arrival. Through the time compensation block **70,** the auction system **1** may account for delays over the communications network **5.** Through the access control block **37,** bidders without credit or bidders that choose to interfere with the auction by making noise can be ejected from the auction.

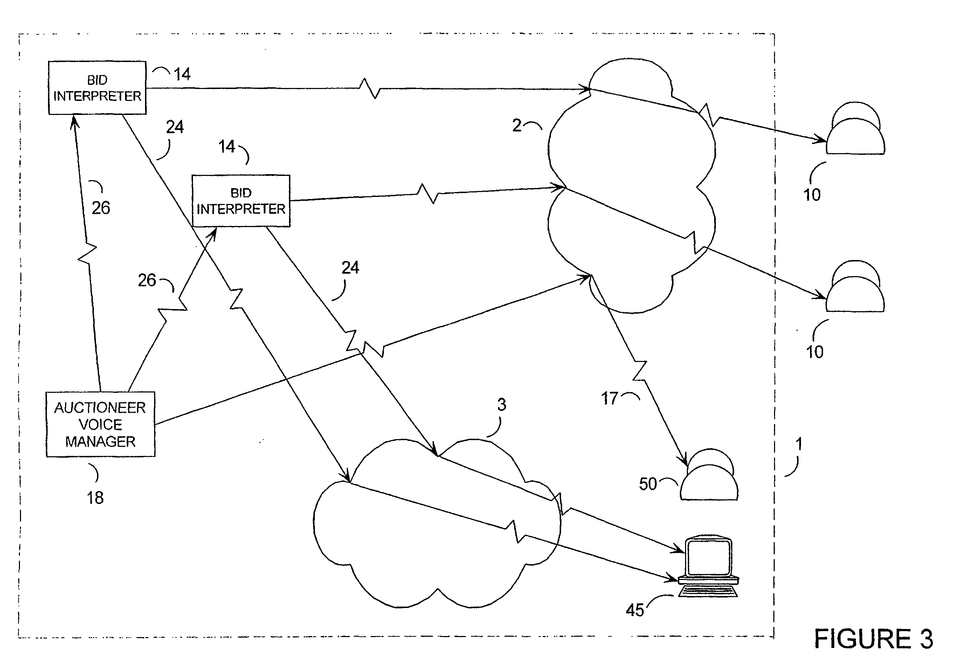

**Figure 3** shows a block diagram of an auction system **1** in accordance with a preferred embodiment of the invention. The auction system **1** comprises a plurality of bid interpreters **14,** an auctioneer's computer **45,** an auctioneer's telephone set **50** and an auctioneer voice manager **18.**

In operation, bidders participate, in real-time, in an auction using bidder telephone sets **10** connected to the auction system **1.** Each bidder telephone set **10** may establish a connection **16** through a telephony network **2,** such as the Public Switch Telephony Network (PSTN), to a corresponding bid interpreter **14.** The bid interpreters **14** process voice or DTMF bidder messages received through connections 16 from bidder telephone sets **10** into data packets. The data packets thus formed are passed through connections **24** and data network **3,** such as the Internet, to be summarized and displayed on the auctioneer's computer **45,** in a summary form. The auctioneer analyzes the information on the auctioneer computer **45** and uses the auctioneer telephone set **50** to enter a voice message to be broadcasted to the bidder telephone sets **10** of the participating bidders. The auctioneer's telephone set **50** establishes a connection **17** through the telephony network **2** to an auctioneer voice manager **18.** The auctioneer voice manager **18** passes the auctioneer's voice through connections **26** to bid interpreters **14.** In turn, the bid interpreters **14** pass the auctioneer messages through the connections **16** to bidder telephone sets **10.** In this embodiment, the selection of the bidder telephone sets **10** corresponding to participating bidders, and which, therefore, should receive auctioneer messages, is done at the level of the bid interpreters **14,** as it will be explained in more detail later.

The bid interpreters **14** are microcomputers performing various operations. One such operation is processing bidder messages into data packets to be sent to the auctioneer computer **45** for display or for further processing. Each data packet formed at a bid interpreter **14** and sent to the auctioneer computer **45,** carries information identifying the bidder that entered the message or the corresponding bidder telephone set **10.** For processing bidder voice messages into data packets, the bid interpreters **14** use suitable voice recognition algorithms known in the art. According to this embodiment, the bid interpreters **14** may also interpret DTMF signals received from bidder telephone sets **10** that have the touch-tone™ option.

Optionally, the bid interpreters **14** in **Figure 3** also perform various authorization procedures. Authorization procedures comprise requesting access information and analyzing access messages from bidders in order to verify the identities of bidders, their creditworthiness, their compliance with predetermined terms and conditions of the auction and the like. In order to perform the authorization procedures, the bid interpreters **14** use voice recognition and other decoding algorithms to recognize passwords or other access messages such as a credit card number. In this embodiment, the bid interpreters **14** may access credit databases in order to verify the credit information provided by bidders. Data packets informing the auctioneer computer **45** of the results of the authorization procedures carried at the bid interpreters **14** are sent through connections **24** to the auctioneer computer **45.** Upon failure to meet authorization conditions, the auctioneer's computer **45** may deny participation in the auction to unauthorized bidders, by sending back data packets through connections **24** to the corresponding bid interpreters **14,** commanding them to shut down. Alternatively, the auctioneer computer **45** may disconnect the input ports for connections **26** to the bid interpreters **14** corresponding to unauthorized bidders. Also, the auctioneer computer **45** may ignore the data packets coming through connections **24** from the bid interpreters **14** corresponding to unauthorized bidders.

The auctioneer computer **45** analyzes the data packets received from the bid interpreters **14.** Selected data packets, such as those that contain bidding information, are outputted in a format that allows the auctioneer to acknowledge the content of the data packets and to identify the associated bidders. The data packets can be outputted by any means known in the art, such as visual, using a monitor terminal connected to the auctioneer computer **45** or audio, using speakers attached to the auctioneer computer **45.** The auctioneer may select the output means and a format of outputting data packets best suited to his or her needs, by means of a user interface (not shown) on the auctioneer computer **45.**

The data packets are presented according to a predetermined scheme. According to this embodiment, the auctioneer's computer **45** uses estimates of the different time delays for different bidders through networks **2** and **3** to compensate for the bias in favor of "closer" users, and uses these estimates in the predetermined scheme, in order to output data packets according to the time when the associated bidder messages were actually entered. In this embodiment, the auctioneer computer **45** accomplishes the time compensation routine by subtracting the round-trip delay through networks **2** and **3** of each data packet it receives, from the time at which same data packet is received, before deciding which data packet came first. The same method may be used to alert the auctioneer that a bidder had entered a bid before being able to hear the closing gavel, and the bid should therefore be allowed. The round-trip time estimates needed for this embodiment are obtained from the controlling software for the networks **2** and **3.** Alternatively, the round-trip estimates could be obtained from the delay in receiving an echo from a bidder telephone set **10** using a system identification algorithm based on an echo cancellation technique known in the art.

In accordance with the embodiment in **Figure 3,** the auctioneer computer **45** may command the bid interpreters **14** to act as part of a voice conferencing system by sending data packets through connections **24** to the bid interpreters **14.** With the voice conferencing system thus enabled, bidders participating in the auction can hear the voices of active bidders in addition to the voice of the auctioneer. Active bidders are herein defined as bidders participating in the auction and entering bidder messages representing valid bids through their telephone sets **10.** Inactive bidders are bidders participating in the auction that remain silent on the line; bidders involved in a different auction process than a bidding process, such as in the process of obtaining authorization; for bidders who make comments that do not pertain to the auction. The distinction among active and inactive bidders is made at the level of bid interpreters **14,** which use voice recognition or other suitable decoding algorithms, to recognize the content of the messages received from bidders.

In accordance with another embodiment of the invention, an auction may be conducted with bidders participating in the auction over a communications network using voice terminals connected to an auction system such as described in any of **Figures 1** to **3,** for example, with other bidders being physically present to the auction, and yet with other bidders participating in the auction over the Internet.

The invention could also be implemented to a lesser extent on existing Internet and PSTN networks. For example, Internet servers could be given much of the functionality of the invention similar to applications such as NetMeeting. Alternatively, the invention could be implemented as an application program on the personal computers of end users interconnected over the Internet, although this allows the possibility of timestamps being inaccurate or falsified, and also makes it difficult to ensure that all participants are using current software. On the PSTN a specialized server could be attached to a class 5 switch. These implementations would not have all the benefits of the invention, but could apply certain aspects of its teachings.

The method steps of the invention may be embodied in sets of executable machine code stored in a variety of formats such as object code or source code. Such code is described generically herein as programming code, or a computer program for simplification. Clearly, the executable machine code may be integrated with the code of other programs, implemented as subroutines, by external program calls or by other techniques as known in the art.

The embodiments of the invention may be executed by a computer processor or similar device programmed in the manner of method steps, or may be executed by an electronic system which is provided with means for executing these steps. Similarly, an electronic memory means such computer diskettes, CD-Roms, Random Access Memory (RAM), Read Only Memory (ROM) or similar computer software storage media known in the art, may be programmed to execute such method steps. As well, electronic signals representing these method steps may also be transmitted via a communication network.

Numerous modifications, variations, and adaptations may be made to the particular embodiments of the invention described above, without departing from the scope of the invention.

## Claims

1. An auction system for use over a communication network (5) comprising:
transmitter means (50) arranged for entering auctioneer messages from an auctioneer;
a plurality of bidder terminals (10) each arranged for entering bidder messages from a bidder respective thereto;
a connecting means (20) interconnecting said transmitter means (50) and said terminals (10);
a processing means (30) attached to said connecting means arranged for converting said bidder messages into a bidder data signal; and
an output means (40) connected to said processing means (30) arranged for presenting said bidder data signals to said auctioneer; **characterised in that** said transmitter means (50) comprises an auctioneer voice transmitter (50) arranged for entering auctioneer voice messages from said auctioneer; and **in that** said plurality of bidder terminals comprises a plurality of bidder voice terminals (10) each arranged for entering voice bidder messages from a bidder respective thereto, each of said bidder voice terminals (10) also being arranged for presenting voice bidder messages from other bidders and said auctioneer voice messages.

2. An auction system according to claim 1, wherein said processing means (30) further comprises a message selector (33) arranged for determining whether said voice bidder messages are active bidder messages or inactive bidder messages such that only said active bidder messages are presented at said output device.

3. An auction system according to claim 1, further including a time compensation means (70) attached to said connection means (20) arranged for determining propagation delays of signals within said network (5) and utilising said propagation delays for ordering said bidder messages at said output means (40) according to a real-time order in to which of said bidder messages was placed.

4. An auction system for use over a communication network (5) comprising:
transmitter means (50) arranged for entering auctioneer messages from an auctioneer;
a plurality of bidder terminals (10) each arranged for entering bidder messages from a bidder respective thereto;
a connecting means (20) interconnecting said transmitter (50) and said terminals (10);
a processing means (30) attached to said connecting means (20) arranged for converting said bidder messages into a bidder data signal;
an output means (40) connected to said processing means (30) arranged for presenting said bidder data signals to said auctioneer; **characterised in that**
said transmitter means (50) comprises an auctioneer voice transmitter (50) arranged for entering auctioneer voice messages from said auctioneer; said plurality of bidder terminals comprises a plurality of bidder voice terminals (10) each arranged for entering voice bidder messages from a bidder respective thereto, each of said bidder voice terminals (10) also being arranged for presenting voice bidder messages from other bidders and said auctioneer voice messages; and
said processing means includes a message selector (33) arranged for determining whether said voice bidder messages are active bidder messages or inactive bidder messages; and **in that**:
the system further comprising a time compensation means (70) attached to said connecting means (20) arranged for determining propagation delays of signals within said network (5) and utilising said propagation delays for ordering said active bidder messages according to a real-time order in which said bidder messages were entered;
said output means (40) being connected to said processing means (30) and said time compensation means (70) being arranged for presenting, in order, said active bidder data signals to said auctioneer.

5. An auction system according to claim 2 or claim 4, wherein said bidder voice terminals (10) are attached, via said connection means (20), to said message selector (33) such that only said active bidder messages are presented at said bidder voice terminals (10).

6. An auction system according to claim 3 or claim 4, wherein said time compensation means (70) further utilises said propagation delays foralerting said auctioneer that one or more of said bidders entered one of said bidder messages before hearing that bidding was closed.

7. An auction system according to claim 3, claim 4 or claim 6, wherein said propagation delay estimates are obtained by estimating the delay before receiving an echo from each bidder voice terminal (10).

8. An auction system according to any one of the preceding claims, further comprising a means for reducing background noise.

9. An auction system according to claim 2 or claim 9, wherein said inactive bidder messages are returned to an originating bidder voice terminal accompanied by a message that said bidder message was determined to be inactive.

10. A processing means (30) for use in an auction system (1) for use over a communication network (5), said auction system having an auctioneer transmitter (50) arranged for entering auctioneer messages from an auctioneer; a plurality of bidder terminals (10) each arranged for entering bidder messages from a bidder respective thereto, each of said bidder terminals (10) also arranged for presenting bidder messages from other bidders and said auctioneer messages; a connecting means (20) interconnecting said transmitter (50) and said terminals (10), said processing means (30) comprising:
recognising means (35) arranged for converting said bidder messages into a bidder data signal; and
output means (40) arranged for presenting said bidder data signal to said auctioneer;
**characterised in that** said auctioneer transmitter (50) is a voice transmitter, said plurality of bidder terminals (10) are voice terminals, and said auctioneer and bidder messages are voice messages; and **in that** said system further comprises a message selector (33) arranged for determining whether said voice bidder messages are active bidder messages or inactive bidder messages such that only said active bidder messages are presented at said output means (40).

11. A processing means (30) according to claim 10, wherein said bidder voice terminals (10) are attached to said message selector (33) such that only said active bidder messages are presented at said bidder voice terminals (10); and preferably wherein said inactive bidder messages are returned to an originating bidder voice terminal accompanied by a message that said bidder message was determined to be inactive.

12. A method of conducting an auction over a network (5) comprising the steps of:
receiving from an auctioneer, an auctioneer message at an auctioneer terminal (50) connected to said network (5);
presenting said auctioneer message at a plurality of bidder terminals (10) connected to said network (5);
receiving a bidder message from a bidder, said bidder message being responsive to said auctioneer message, said bidder message received at one of said bidder terminals (10) respective to said bidder;
presenting said received bidder message at a remainder of said bidder terminals (10);
converting said bidder message into a bidder data signal;
presenting said bidder data signal to said auctioneer at an output means (40); and
repeating the foregoing steps until said auctioneer closes bidding; **characterised in that** said auctioneer terminal (50) and said plurality of bidder terminals (10) are voice terminals and said auctioneer message and said bidder message are voice messages.

13. A method according to claim 12, further comprising the step of determining whether said voice bidder message is active or inactive and only presenting said bidder data signal at said output means (40) if said voice bidder message was active; and preferably the step of only presenting said voice bidder message at said remainder of said bidder voice terminals (10) if said voice bidder message was active; and returning said voice bidder message to an originating bidder voice terminal (10) if said voice bidder message was inactive; and preferably sending a notification to said originating bidder voice terminal (10) that said voice bidder message was inactive.

14. A method according to claim 13, further comprising the steps of:
receiving at least one additional bidder voice message;
determining propagation delays of signals within said network (5); and
utilising said propagation delays for presenting said bidder messages at said output means (40) according to a real-time order in which of said bidder messages was placed.

## Patentansprüche

1. Auktlons-System zur Verwendung Über ein Kommunikationsnetzwerk (5), enthaltend:
Transmittermittel (50), die zur Eingabe von Auktionsnachrichten eines Auktionators angeordnet sind;
eine Anzahl von Bieterstationen (10), von denen jede zur Eingabe von Gebotsnachrichten eines zugeordneten Bieters angeordnet ist; Verbindungsmittel (20), welche die Transmittermittel (50) und die Bieterstationen (10) verbinden;
ein an den Verbindungsmitteln angebrachtes Prozessormittel (30), das zum Umwandeln der Gebotsnachrichten in ein Gebot-Datensignal angeordnet ist;
ein mit dem Prozessormittel (30) verbundenes Ausgangsmittel (40), das zum Präsentieren der Gebot-Datensignale an den Auktionator angeordnet ist;
**dadurch gekennzeichnet, daß** die Transmittermittel (50) einen Auktions-Stimmentransmitter (50) umfassen, der zur Eingabe von stimmlichen Auktionsnachrichten des Auktionators angeordnet ist, und daß die Anzahl von Bieterstationen jeweils eins Anzahl von Bieter-Stimmenstationen (10) umfassen, von denen jede zur Eingabe von stimmlichen Gebotsnachrichten des betreffenden Bieters angeordnet ist, wobei jede der Bieter-Stimmenstatlonen (10) auch zum Präsentieren der stimmlichen Gebotsnachrichten der anderen Bieter und der stimmlichen Auktionsnachrichten angeordnet Ist.

2. Auktions-System nach Anspruch 1, bei dem das Prozessormittel (30) weiterhin einen Nachrichtenselektor (33) umfaßt, der angeordnet ist zum Bestimmen, ob die stimmlichen Gebotsnachrichten aktive Gebotsnachrichten oder inaktive Gebotsnachrichten sind, so daß nur die aktiven Gebotsnachrichten an dem Ausgangsmittel präsentiert werden.

3. Auktlons-System nach Anspruch 1, weiterhin enthaltend ein an den Verbindungsmitteln (20) angebrachtes Zeitkompensationsmittel (70), das zum Bestimmen der Übertragungsverzögerung der Signale Innerhalb des Netzwerks (5) angeordnet ist und die Übertragungsverzögerungen dazu benutzt, die Gebotsnachrichten an dem Ausgangsmittel (40) nach Maßgabe einer Echtzeit-Reihenfolge, in der die Gebotsnachrichten plaziert wurden, zu ordnen.

4. Auktions-system zur Verwendung über ein Kommunikationsnetzwerk (5), enthaltend:
Transmittermittel (50), die zur Eingabe von Auktionsnachrichten eines Auktionators angeordnet sind;
eine Anzahl von Bieterstationen (10), von denen jede zur Eingabe von Gebotsnachrichten eines zugeordneten Bieters angeordnet ist; Verbindungsmittel (20), welche die Transmittermittel (50) und die Bieterstationen (10) verbinden;
ein an den Verbindungsmitteln angebrachtes Prozessormittel (30), das zum Umwandeln der Gebotsnachrichten in ein Gebot-Datensignal angeordnet ist;
ein mit dem Prozessormittel (30) verbundenes Ausgangsmittel (40), das zum Präsentieren der Gebot-Datensignale an den Auktionator angeordnet ist;
**dadurch gekennzeichnet, daß** die Transmittermittel (50) einen Auktlons-Stimmentransmitter (50) umfassen, der zur Eingabe von stimmlichen Auktionsnachrichten des Auktionators angeordnet ist, daß die Anzahl von Bieterstationen jeweils eins Anzahl von Bieter-Stimmenstationen (10) umfassen, von denen jede zur Eingabe von stimmlichen Gebotsnachrichten des betreffenden Bieters angeordnet ist, wobei jede der Bieter-Stimmenstationen (10) auch zum Präsentieren der stimmlichen Gebotsnachrichten der anderen Bieter und der stimmlichen Auktionsnachrichten angeordnet ist, daß das Prozessormittel (30) einen Nachrichtenselektor (33) umfaßt, der angeordnet ist zum Bestimmen, ob die stimmlichen Gebotsnachrichten aktive Gebotsnachrichten oder inaktive Gebotsnachrichten sind, daß das System weiterhin ein an dem Verbindungsmittel (20) angebrachtes Zeitkompensationsmittel (70) enthält, das zum Bestimmen der Übertragungsverzögerung von Signalen innerhalb des Netzwerks angeordnet ist und die Übertragungsverzögerungen ausnutzt zum Ordnen der aktiven Gebotsnachrichten nach Maßgabe einer Echtzeit-Reihenfolge, in der die Gebotsnachrichten eingegeben wurden, und daß schließlich das mit dem Prozessormittel (30) und dem Zeitkompensationsmittel (70) verbundene Ausgangsmittel (40) angeordnet ist, um die aktiven Gebot-Datensignale dem Auktionator in der Reihenfolge zu präsentieren.

5. Auktions-System nach Anspruch 2 oder 4, worin die Bieter-Stimmenstationen (10) über das Verbindungsmittel (20) so mit dem Nachrichtenselektor (33) verbunden sind, daß nur die aktiven Gebotsnachrichten an den Bieter-Stimmenstationen (10) präsentiert werden.

6. Auktions-System nach Anspruch 3 oder 4, bei dem die Zeitkompensationsmittel (70) weiterhin die Übertragungsverzögerungen benutzen, um den Auktionator zu warnen, daß einer oder mehrere der Bieter eine der Gebotsnachrichten eingegeben hat, bevor er gehört hat, daß das Bieten geschlossen wurde.

7. Auktions-System nach Anspruch 3, 4 oder 6, bei dem Schätzwerte der Übertragungsverzögerung erhalten werden durch Schätzen der Verzögerung, bevor ein Echo aus jeder Bieter-Stimmenstation (10) empfangen wird.

8. Auktions-System nach einem der vorhergehenden Ansprüche, weiterhin enthaltend ein Mittel zum Reduzieren des Hintergrund-Rauschens.

9. Auktions-System nach Anspruch 2 oder 9, bei dem die inaktiven Gebotsnachrichten an die aussendende Bieter-Stimmenstation zurückgeleitet werden, begleitet von einer Meldung, daß diese Bieternachricht als inaktiv bestimmt wurde.

10. Prozessormittel (30) zur Verwendung in einem Auktions-System zur Verwendung über ein Kommunikationsnetzwerk (5), wobei das Auktions-System einen Auktions-Transmitter (50) enthält, der zur Eingabe von Auktionsnachrichten eines Auktionators angeordnet ist, sowie eine Anzahl von Bieterstationen (10), von denen jede zur Eingabe von Gebotsnachrichten eines zugeordneten Bieters angeordnet ist, wobei jede Bieterstation auch zum Präsentieren der Gebotsnachrichten von anderen Bietern und der Auktionsnachrichten des Aktionärs angeordnet ist, sowie ein Verbindungsmittel (20), welches den Transmitter (50) und die Stationen (10) verbinder, wobei das Prozessormittel (30) umfaßt:
Erkennungsmittel (35), die zum Umwandeln der Gebotsnachrichten in ein Gebot-Datensignal angeordnet sind; und ein Ausgangsmittel (40), das zum Präsentieren der Gebot-Datensignale an den Auktionator angeordnet ist,
**dadurch gekennzeichnet, daß** der Auktionstransmitter (50) ein Stimmentransmitter ist, daß die Anzahl von Bieterstationen Stimmenstationen sind, daß sowohl die Auktionsnachrichten als auch die Gebotsnachrichten Stimmennachrichten sind, und daß das System weiterhin umfaßt einen Nachrichtenselektor (33), der angeordnet ist zur Bestimmung, ob die Gebotsstimmennachrichten aktive Gebotsnachrichten oder inaktive Gebotsnachrichten sind, so daß nur die aktiven Gebotsnachrichten an das Ausgangsmittel (40) weitergegeben werden.

11. Prozessormittel (30) nach Anspruch 10, bei dem die Bieter-Stimmenstationen (10) an dem Nachrichtenselektor (33) so angebracht sind, daß nur aktive Gebotsnachrichten an den Bieter-Stimmenstationen (10) präsentiert werden und bei dem vorzugsweise inaktive Gebotsnachrichten an die ausgebende Bieter-Stimmenstation zurückgeleitet werden, begleitet von einer Meldung, daß diese Gebotsnachricht als inaktiv bestimmt wurde.

12. Verfahren zur Durchführung einer Auktion über ein Netzwerk (5), umfassend die Schritte:
Empfang einer Auktionsnachricht von einem Auktionator an einer mit dem Netzwerk (5) verbundenen Auktionatorstation (50);
Präsentation der Auktionsnachricht an eine Mehrzahl von ebenfalls mit dem Netzwerk (5) verbundenen Bieterstationen (10);
Empfang einer Gebotsnachricht von einem Bieter als Antwort auf die Auktionsnachricht, wobei die Gebotsnachricht an einer der Bieterstationen (10), die dem betreffenden Bieter zugeordnet Ist, empfangen wird;
Präsentieren der empfangenen Gebotsnachricht an den übrigen Bieterstationen (10);
Umwandeln der Gebotsnachricht in ein Gebot-Datensignal;
Präsentieren des Gebot-Ddatensignals über ein Ausgangsmittel (40) an den Auktionator;
Wiederholung der vorgenannten Schritte, bis der Auktionator das Bieten schließt, **gekennzeichnet dadurch, daß** die Auktionatorstation (50) und die Anzahl von Bieterstationen (10) Stimmenstationen sind und daß sowohl die Auktionsnachricht als auch die Gebotsnachrichten Stimmennachrichten sind.

13. Verfahren nach Anspruch 12, weiterhin umfassend den Schritt des Bestimmens, ob die stimmliche Gebotsnachricht eine aktive oder inaktive Nachricht ist, wobei nur ein Gebot-Datensignal an das Ausgangsmittel (40) weitergegeben wird, wenn die stimmliche Gebotsnachricht eine aktive Nachricht war, und vorzugsweise auch enthaltend den Schritt des Präsentlerens der stimmlichen Gebotsnachricht an den Rest der Bieter-Stimmenstationen (10) nur dann, wenn die stimmliche Gebotsnachricht eine aktive Nachricht war, und vorzugsweise weiterhin enthaltend den Schritt des Zurückgebens der stimmlichen Gebotsnachricht an die aussendende Bieter-Stimmenstation (10), wenn die stimmliche Gebotsnachricht eine inaktive Nachricht war, und vorzugweise schließlich enthaltend den Schritt des Aussendens einer Meldung an die ausgebende Bieter-Stimmenstation (10), daß die stimmliche Gebotsnachricht eine inaktive Nachricht war.

14. Verfahren nach Anspruch 13, weiterhin enthaltend die Schritte:
Empfang mindestens einer zusätzlichen Gebots-Stimmennachricht; und
Bestimmen von Übertragungsverzögerungen von Signalen innerhalb des Netzwerks; und
Benutzen der Übertragungsverzögerungen zum Präsentieren der Gebotsnachrichten an dem Ausgangsmittel (40) nach Maßgabe einer Echtzeit-Reihenfolge, in der die Gebotsnachrichten plaziert wurden.

## Revendications

1. Système de vente aux enchères à utiliser sur un réseau de communication (5) comportant :
des moyens émetteurs (50) adaptés pour entrer des messages de commissaire-priseur provenant d'un commissaire-priseur,
une pluralité de terminaux d'enchérisseur (10) adaptés chacun pour entrer des messages d'enchérisseur provenant d'un enchérisseur correspondant à celui-ci,
des moyens de connexion (20) interconnectant lesdits moyens émetteurs (50) et lesdits terminaux (10),
des moyens de traitement (30) reliés auxdits moyens de connexion adaptés pour convertir lesdits messages d'enchérisseur en un signal de données d'enchérisseur, et
des moyens de sortie (40) reliés auxdits moyens de traitement (30) adaptés pour présenter lesdits signaux de données d'enchérisseur audit commissaire-priseur, **caractérisé en ce que** lesdits moyens émetteurs (50) comportent un émetteur vocal de commissaire-priseur (50) adapté pour entrer des messages vocaux de commissaire-priseur provenant dudit commissaire-priseur, et **en ce que** ladite pluralité de terminaux d'enchérisseur comporte une pluralité de terminaux vocaux d'enchérisseur (10) adaptés chacun pour entrer des messages vocaux d'enchérisseur provenant d'un enchérisseur correspondant à celui-ci, chacun desdits terminaux vocaux d'enchérisseur (10) étant également adaptés pour présenter des messages vocaux d'enchérisseur provenant d'autres enchérisseurs et lesdits messages vocaux de commissaire-priseur.

2. Système de vente aux enchères selon la revendication 1, dans lequel lesdits moyens de traitement (30) comportent en outre un sélecteur de message (33) adapté pour déterminer si lesdits messages vocaux d'enchérisseur sont des messages d'enchérisseur actifs ou des messages d'enchérisseur inactifs de sorte que seuls lesdits messages d'enchérisseur actifs sont présentés audit dispositif de sortie.

3. Système de vente aux enchères selon la revendication 1, incluant en outre des moyens de compensation de temps (70) reliés auxdits moyens de connexion (20) adaptés pour déterminer des délais de propagation de signaux dans ledit réseau (5) et utiliser lesdits délais de propagation pour ordonner lesdits messages d'enchérisseur dans lesdits moyens de sortie (40) conformément à un ordre en temps réel dans lequel lesdits messages d'enchérisseur étaient placés.

4. Système de vente aux enchères à utiliser sur un réseau de communication (5) comportant :
des moyens émetteurs (50) adaptés pour entrer des messages de commissaire-priseur provenant d'un commissaire-priseur,
une pluralité de terminaux d'enchérisseur (10) adaptés chacun pour entrer des messages d'enchérisseur provenant d'un enchérisseur correspondant à celui-ci,
des moyens de connexion (20) interconnectant lesdits émetteurs (50) et lesdits terminaux (10),
des moyens de traitement (30) reliés auxdits moyens de connexion (20) adaptés pour convertir lesdits messages d'enchérisseur en un signal de données d'enchérisseur,
des moyens de sortie (40) reliés auxdits moyens de traitement (30) adaptés pour présenter lesdits signaux de données d'enchérisseur audit commissaire-priseur, **caractérisé en ce que**,
lesdits moyens émetteurs (50) comportent un émetteur vocal de commissaire-priseur (50) adapté pour entrer des messages vocaux de commissaire-priseur provenant dudit commissaire-priseur, ladite pluralité de terminaux d'enchérisseur comporte une pluralité de terminaux vocaux d'enchérisseur (10) adaptés chacun pour entrer des messages vocaux d'enchérisseur provenant d'un enchérisseur correspondant à celui-ci, chacun desdits terminaux vocaux d'enchérisseur (10) étant également adaptés pour présenter des messages vocaux d'enchérisseur provenant d'autres enchérisseurs et lesdits messages vocaux de commissaire-priseur, et
lesdits moyens de traitement incluent un sélecteur de message (33) adapté pour déterminer si lesdits messages vocaux d'enchérisseur sont des messages d'enchérisseur actifs ou des messages d'enchérisseur inactifs, et **en ce que** :
le système comporte en outre des moyens de compensation de temps (70) reliés auxdits moyens de connexion (20) adaptés pour déterminer des délais de propagation de signaux dans ledit réseau (5) et utiliser lesdits délais de propagation pour ordonner lesdits messages d'enchérisseur actifs conformément à un ordre en temps réel dans lequel ont été entrés lesdits messages des enchérisseurs,
lesdits moyens de sortie (40) étant connectés auxdits moyens de traitement (30) et lesdits moyens de compensation de temps (70) étant adaptés pour présenter, dans l'ordre, lesdits signaux de données d'enchérisseur actifs audit commissaire-priseur.

5. Système de vente aux enchères selon la revendication 2 ou la revendication 4, dans lequel lesdits terminaux vocaux d'enchérisseur (10) sont reliés, via lesdits moyens de connexion (20), audit sélecteur de message (33) de telle sorte que seuls lesdits messages d'enchérisseur actifs sont présentés auxdits terminaux vocaux d'enchérisseur (10).

6. Système de vente aux enchères selon la revendication 3 ou la revendication 4, dans lequel lesdits moyens de compensation de temps (70) utilisent en outre lesdits délais de propagation pour alerter ledit commissaire-priseur qu'un ou plusieurs desdits enchérisseurs a entré l'un desdits messages d'enchérisseur avant d'entendre que la surenchère a été fermée.

7. Système de vente aux enchères selon la revendication 3, la revendication 4 ou la revendication 6, dans lequel lesdites estimations des délais de propagation sont obtenues en estimant le délai avant de recevoir un écho provenant de chaque terminal vocal d'enchérisseur (10).

8. Système de vente aux enchères selon l'une quelconque des revendications précédentes, comportant en outre des moyens pour réduire le bruit de fond.

9. Système de vente aux enchères selon la revendication 2 ou la revendication 9, dans lequel lesdits messages d'enchérisseur inactifs sont renvoyés à un terminal vocal d'enchérisseur d'origine accompagnés d'un message indiquant que ledit message d'enchérisseur a été déterminé comme étant inactif.

10. Moyens de traitement (30) destinés à être utilisés dans un système de vente aux enchères (1) destiné à être utilisé sur un réseau de communication (5), ledit système de vente aux enchères ayant un émetteur de commissaire-priseur (50) adapté pour entrer des messages de commissaire-priseur provenant d'un commissaire-priseur, une pluralité de terminaux d'enchérisseur (10) chacun adapté pour entrer des messages d'enchérisseur provenant d'un enchérisseur correspondant à celui-ci, chacun desdits terminaux d'enchérisseur (10) étant également adaptés pour présenter des messages d'enchérisseur provenant d'autres enchérisseurs et lesdits messages de commissaire-priseur, des moyens de connexion (20) interconnectant lesdits émetteurs (50) et lesdits terminaux (10), lesdits moyens de traitement (30) comportant :
des moyens de reconnaissance (35) adaptés pour convertir lesdits messages d'enchérisseur en un signal de données d'enchérisseur, et
des moyens de sortie (40) adaptés pour présenter ledit signal de données d'enchérisseur audit commissaire-priseur,
**caractérisés en ce que** ledit émetteur de commissaire-priseur (50) est un émetteur vocal, ladite pluralité de terminaux d'enchérisseur (10) sont des terminaux vocaux, et lesdits messages de commissaire-priseur et d'enchérisseur sont des messages vocaux, et **en ce que** ledit système comporte en outre un sélectionneur de message (33) adapté pour déterminer si lesdits messages vocaux d'enchérisseur sont des messages d'enchérisseur actifs ou des messages d'enchérisseur inactifs de sorte que seuls lesdits messages d'enchérisseur actifs sont présentés auxdits moyens de sortie (40).

11. Moyens de traitement (30) selon la revendication 10, dans lesquels lesdits terminaux vocaux d'enchérisseur (10) sont reliés audit sélecteur de message (33) de telle sorte que seuls lesdits messages d'enchérisseur actifs sont présentés auxdits terminaux vocaux d'enchérisseur (10), et de préférence dans lesquels lesdits messages d'enchérisseur inactifs sont renvoyés à un terminal vocal d'enchérisseur d'origine accompagnés d'un message indiquant que ledit message d'enchérisseur a été déterminé comme étant inactif.

12. Procédé pour réaliser une vente aux enchères via un réseau (5) comportant les étapes suivantes :
recevoir en provenance d'un commissaire-priseur un message de commissaire-priseur au niveau d'un terminal de commissaire-priseur (50) relié audit réseau (5),
présenter ledit message de commissaire-priseur à une pluralité de terminaux d'enchérisseur (10) reliés audit réseau (5),
recevoir un message d'enchérisseur provenant d'un enchérisseur, ledit message d'enchérisseur étant sensible audit message de commissaire-priseur, ledit message d'enchérisseur reçu dans l'un desdits terminaux d'enchérisseur (10) correspondant audit enchérisseur,
présenter ledit message d'enchérisseur reçu à un reste desdits terminaux d'enchérisseur (10),
convertir ledit message d'enchérisseur en un signal de données d'enchérisseur,
présenter ledit signal de données d'enchérisseurs audit commissaire-priseur dans des moyens de sortie (40), et
répéter les étapes précédentes jusqu'à ce que ledit commissaire-priseur ferme la surenchère, **caractérisé en ce que** ledit terminal de commissaire-priseur (50) et ladite pluralité de terminaux d'enchérisseur (10) sont des terminaux vocaux et ledit message de commissaire-priseur et le message d'enchérisseur sont des messages vocaux.

13. Procédé selon la revendication 12, comportant en outre l'étape consistant à déterminer si ledit message vocal d'enchérisseur est actif ou inactif et présenter uniquement ledit signal de données d'enchérisseur auxdits moyens de sortie (40) si ledit message vocal d'enchérisseur était actif, et de préférence l'étape consistant à présenter uniquement ledit message vocal d'enchérisseur audit reste desdits terminaux vocaux d'enchérisseur (10) si ledit message vocal d'enchérisseur était actif, et renvoyer ledit message vocal d'enchérisseur à un terminal vocal d'enchérisseur d'origine (10) si ledit message vocal d'enchérisseur était inactif, et envoyer de préférence une notification audit terminal vocal d'enchérisseur d'origine (10) indiquant que ledit message vocal d'enchérisseur était inactif.

14. Procédé selon la revendication 13, comportant en outre les étapes suivantes :
recevoir au moins un message vocal d'enchérisseur supplémentaire,
déterminer les délais de propagation des signaux dans ledit réseau (5), et
utiliser lesdits délais de propagation pour présenter lesdits messages d'enchérisseur auxdits moyens de sortie (40) selon un ordre en temps réel dans lequel lesdits messages d'enchérisseur ont été placés.
